# EUROPÄISCHE PATENTSCHRIFT

(11) **EP 2 426 466 B1**
(45) Veröffentlichungstag und Bekanntmachung des Hinweises auf die Patenterteilung: **17.12.2014**
(21) Anmeldenummer: 11006953.1
(22) Anmeldetag: 25.08.2011
(51) Int. Cl.: G01F 1/32, G01B 11/16, G01D 5/353, G02B 6/02, G02B 6/293

(54) **Auslenkungsmessgerät nach dem Interferometrieprinzip**
Deflection measuring device using the interferometry principle
Appareil de mesure de déviation selon le principe d'interférométrie

(30) Priorität: 07.09.2010 DE 102010044583
(43) Veröffentlichungstag der Anmeldung: 07.03.2012
(73) Patentinhaber: KROHNE Messtechnik GmbH, 47058 Duisburg (DE)
(72) Erfinder: Krisch, Henrik, 47809 Krefeld (DE)
(74) Vertreter: Gesthuysen Patent- und Rechtsanwälte

(56) Entgegenhaltungen:
- EP-A1- 1 936 332
- CA-A1- 2 549 810
- MACPHERSON W N ET AL: "Remotely addressed optical fibre curvature sensor using multicore photonic crystal fibre", OPTICS COMMUNICATIONS, Bd. 193, Nr. 1-6, 15. Juni 2001 (2001-06-15), Seiten 97-104, XP004245384, ISSN: 0030-4018, DOI: 10.1016/S0030-4018(01)01260-3
- VILLATORO J ET AL: "Temperature-insensitive photonic crystal fiber interferometer for absolute strain sensing", APPLIED PHYSICS LETTERS, Bd. 91, 27. August 2007 (2007-08-27), Seiten 91109-1, XP002462607, ISSN: 0003-6951, DOI: 10.1063/1.2775326

## Beschreibung

Die Erfindung betrifft ein Auslenkungsmessgerät nach dem Interferometrieprinzip mit einer Strahlungsquelle, mit einem einen ersten Lichtweg realisierenden ersten faseroptischen Mittel, mit einem einen zweiten Lichtweg realisierenden zweiten faseroptischen Mittel, mit einem Auslenkungskörper und mit einer Auswerteschaltung, wobei das erste faseroptische Mittel und das zweite faseroptische Mittel eingangsseitig mit interferenzfähiger Strahlung der Strahlungsquelle beaufschlagbar sind, wobei wenigstens das erste faseroptische Mittel mit dem Auslenkungskörper verbunden ist und wobei die in dem ersten faseroptischen Mittel geführte erste Teilstrahlung und die in dem zweiten faseroptischen Mittel geführte zweite Teilstrahlung ausgangsseitig zusammengeführt werden und die Interferenzstrahlung der Auswerteschaltung zugeführt und durch die Auswerteschaltung ausgewertet wird.

Auf dem Interferometrieprinzip beruhende Auslenkungsmessgeräte sind im Stand der Technik seit langem bekannt, und sie finden überall dort Anwendung, wo mechanische Auslenkungen eines Auslenkungskörpers mit großer Empfindlichkeit aufgenommen und erkannt werden müssen. Anwendungen finden sich beispielsweise im Gebiet der Vibrationsmessgeräte, die auf der wiederkehrenden oder auch periodischen Auslenkung eines Auslenkungskörpers beruhen, wobei die Auslenkung des Auslenkungskörpers entweder fremdbestimmt ist durch einen physikalischen Prozess - z. B. bei der Vortex-Durchflussmessung - oder wobei eine Auslenkung des Auslenkungskörpers angeregt wird und die eigentlich interessierende Größe beispielsweise in der Dämpfung der angeregten Schwingung besteht - z. B. bei der Viskositätsmessung -. Bei anderen Messaufgaben interessiert der Grad der Auslenkung des Auslenkungskörpers, wie zum Beispiel bei der messtechnischen Erfassung der Auslenkung einer Membran bei der Druck- oder Differenzdruckmessung.

Die faseroptische Interferometrie ist unter anderem deshalb vorteilhaft, weil bereits sehr geringe Auslenkungen detektiert werden können, nämlich Auslenkungen, die im (Sub-)Wellenbereich der verwendeten Strahlung liegen. Bekanntlich werden mit einem Interferometer zwei zeitlich hinreichend kohärente - d. h. interferenzfähige - Strahlen zur Überlagerung gebracht. Üblicherweise wird die Strahlung der - kohärenten - Strahlungsquelle mit einem Strahlteiler in einen ersten Teilstrahl und einen zweiten Teilstrahl aufgeteilt, wobei die Teilstrahlen im Falle der hier betrachteten Verwendung von faseroptischen Mitteln über eben diese faseroptischen Mittel geführt werden. Die durch die faseroptischen Mittel realisierten Lichtwege des ersten Teilstrahls und des zweiten Teilstrahls werden auch als die Arme des Interferometers bezeichnet. Am Ausgang des Interferometers werden die Teilstrahlen zusammengeführt und zur Interferenz gebracht. Die Strahlungsintensität am Ausgang des Interferometers ist proportional zum Kosinus der Phasendifferenz der beiden interferierenden Teilstrahlen. Änderungen der Phasendifferenz, z. B. hervorgerufen durch kleinste Änderungen der Länge eines Interferometerarmes, führen zu einer detektierbaren Intensitätsänderung am Ausgang des Interferometers, wobei die Längenänderung im vorliegenden Fall daraus resultiert, dass einer der Lichtwege über den Auslenkungskörper geführt ist, so dass sich eine Auslenkung des Auslenkungskörpers unmittelbar auf die Länge des Lichtweges auswirkt und daher detektierbar ist. Der Begriff "faseroptisches Mittel" ist hier nicht einengend im Sinne von Wellenleiter zu verstehen, gleichwohl kann es sich auch um einen Wellenleiter handeln. Mit einem faseroptischen Mittel können beispielsweise auch verschiedene Kerne innerhalb eines Lichtwellenleiters gemeint sein.

Als Interferometer werden häufig Mach-Zehnder-Interferometer verwendet, andere Interferometertypen, beispielsweise das Michelson-Interferometer, sind grundsätzlich auch denkbar. Für die Erzeugung der im Interferometer verwendeten Strahlung eignen sich insbesondere Halbleiterlaser als Strahlungsquelle. Auch wenn hier von Lichtwegen die Rede ist, die mit den faseroptischen Mitteln realisiert werden, ist darunter nicht einengend nur sichtbare elektromagnetische Strahlung zu verstehen, vielmehr kann es sich um beliebige elektromagnetische Strahlung handeln, so lange sie für faseroptische Anwendungen im Bereich der Interferometrie geeignet ist.

Die hohe Empfindlichkeit des interferometrischen Messverfahrens hat jedoch nicht nur Vorteile, sondern bringt auch Nachteile mit sich, da aufgrund der hohen Empfindlichkeit stets die Gefahr besteht, dass unerwünschte Störsignale erzeugt werden, was insbesondere in den häufig rauen Umgebungen der Prozessmesstechnik gilt. Das Problem besteht hier darin, dass der Auslenkungskörper zusammen mit dem an ihm befestigten ersten oder zweiten faseroptischen Mittel nahe an den zu erfassenden Prozess geführt werden muss, wohingegen die Auswerteschaltung möglichst von dem Prozess entfernt angeordnet werden sollte, wie beispielsweise bei Hochtemperatur- oder Hochdruckanwendungen. Neben der Auswerteschaltung sind häufig auch die zur Anwendung kommenden optischen Koppler gegenüber thermischen und mechanischen Belastungen empfindlich, wobei die optischen Koppler die Wechselwirkungsbereiche des ersten und des zweiten faseroptischen Mittels bilden. Wenn die optischen Koppler von dem messtechnisch zu erfassenden physikalischen Prozess entfernt angeordnet werden müssen, ist damit zwingend eine sehr große Erstreckung der durch das erste faseroptische Mittel und durch das zweite faseroptische Mittel gebildeten Lichtwege verbunden. Dies bedeutet jedoch auch, dass der für eine Auslenkung empfindliche Bereich nicht nur auf den Auslenkungskörper beschränkt ist, sondern auch auf einen gegebenenfalls weit erstreckten Zuleitungsbereich zu dem Auslenkungskörper, was aus den zuvor beschriebenen Gründen problematisch sein kann.

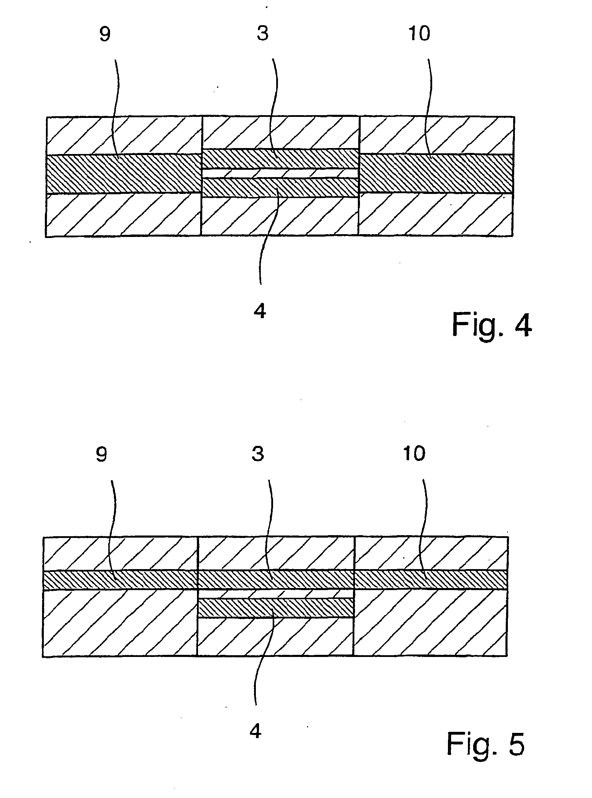

MACPHERSON W N ET AL: "Remotely addressed optical fibre curvature sensor using multicore photonic crystal fibre", OPTICS COMMUNICATIONS, Bd. 193, Nr. 1-6, 15. Juni 2001, Seiten 97-104, offenbart in Figur 5 ein Auslenkungsmessgerät nach dem Interferometrieprinzip mit einer Strahlungsquelle, einer Dualcore-Faser, einem Auslenküngskörper, und einer Auswerteschaltung. Ein Teil der Dualcore-Faser ist am Auslenkungskörper angeordnet, ein zweiter Teil ist in einer Schleife außerhalb des Auslenkungskörpers angeordnet, um einen zusätzlichen, festen Phasenunterschied zwischen den beiden Kernen der Faser zu erzeugen.

Es ist daher Aufgabe der vorliegenden Erfindung, ein Auslenkungsmessgerät nach dem Interferometrieprinzip unter dein Einsatz faseroptischer Mittel anzugeben, das weniger anfällig ist für zwischen der Auswerteeinheit und dem Auslenkungskörper wirkende Störungen.

Die zuvor hergeleitete und dargestellte Aufgabe ist bei dem Auslenkungsmessgerät nach dem Interferometrieprinzip, von dem die vorliegende Erfindung ausgeht, dadurch gelöst, dass das erste faseroptische Mittel und das zweite faseroptische Mittel ausschließlich am Auslenkungskörper angeordnet sind, das erste faseroptische Mittel und/oder das zweite faseroptische Mittel eingangsseitig mit einer einzigen optischen Speisefaser mit der Strahlungsquelle verbunden sind/ist und das erste faseroptische Mittel und/oder das zweite faseroptische Mittel ausgangsseitig mit einer einzigen optischen Auswertefaser mit der Auswerteschaltung verbunden sind. Wenn es heißt, dass das erste faseroptische Mittel und das zweite faseroptische Mittel ausschließlich am Auslenkungskörper angeordnet sind, dann bedeutet dies, dass sich die den ersten und den zweiten Lichtweg realisierenden faseroptischen Mittel ausschließlich im Bereich des Auslenkungskörpers erstrecken und nicht über den Auslenkungskörper hinausragen und auch keine direkte Verbindung zu der Strahlungsquelle und zu der Auswerteschaltung bilden. Vielmehr wird die Verbindung des ersten faseroptischen Mittels und/oder des zweiten faseroptischen Mittels mit der Strahlungsquelle über eine einzige optische Speisefaser realisiert, wobei hierzu keine zwischengeschalteten optischen Koppler verwendet werden, vielmehr Verbindungen zwischen den optischen Fasern- also zwischen der Speisefaser und dem ersten und/oder dem zweiten faseroptischen Mittel und der Auswertefaser und dem ersten und/oder dem zweiten faseroptischen Mittel - mit den bekannten Verfahren hergestellt sind, also beispielsweise durch thermisches Spleißen. Diesem Aufbau liegt die Erkenntnis zugrunde, dass ein technisch verwertbarer Interferenzeffekt zwischen den Teilstrahlungen des ersten faseroptischen Mittels und des zweiten faseroptischen Mittels auch ohne den üblichen Aufbau mit diskreten optischen Kopplern realisiert werden kann.

Gemäß einer bevorzugten Ausgestaltung der Erfindung ist vorgesehen, dass das erste faseroptische Mittel und das zweite faseroptische Mittel gemeinsam durch eine - also eine einzige - optische Multicore-Faser gebildet sind, also durch eine Vielzahl von optischen Kernen innerhalb einer optischen Faser realisiert sind. Die Lichtwege des ersten und des zweiten faseroptischen Mittels werden in der einen optischen Multicore-Faser jeweils als ein Bündel lichtleitender Kerne realisiert, die beispielsweise gemeinsam von einem niedrigbrechenden Material (Cladding) umgeben sind. Bevorzugt werden das erste faseroptische Mittel und das zweite faseroptische Mittel durch eine optische Dualcore-Faser realisiert, wobei jeder Lichtweg durch einen Kern der Dualcore-Faser gebildet wird.

Bei einer bevorzugten Ausgestaltung der Erfindung ist die Multicore- bzw. Dualcore-Faser mit einem lichtleitenden Kern und einem den Kern konzentrisch umgebenden lichtleitenden Ringbereich realisiert, wobei dieser symmetrische Aufbau den Vorteil mit sich bringt, keine Vorzugsrichtung aufzuweisen was auch die Montage der konzentrischen Faser erleichtert.

In bevorzugten Ausführungsbeispielen sind das erste faseroptische Mittel und/oder das zweite faseroptische Mittel sowohl in der Multicore- wie auch in der Dualcore-Variante als mikrostrukturierte optische Fasern ausgebildet. Es kommen Realisierungen in Form von photonischen Kristallfasern als Vollkernfaser (Solid Core PCF) wie auch als Hohlkernfaser (Holey Core PCF) in Betracht.

Eine vorteilhafte Ausgestaltung der Erfindung besteht darin, dass die optische Speisefaser und die optische Auswertefaser durch eine optische Singlecore-Faser gebildet sind, wobei es selbstverständlich auch möglich ist, nur die optische Speisefaser und nur die optische Auswertefaser durch eine optische Singlecore-Faser auszubilden. Mit den Singlecore-Fasern lassen sich praktisch beliebige Distanzen zwischen der Strahlungsquelle und der Auswerteschaltung einerseits und den für die interferometrische Messung entscheidenden Lichtwegen andererseits überbrücken, da die Singlecore-Fasern nicht empfindlich gegenüber irgendeiner mechanischen Beeinflussung sind. In diesem Bereich zwischen dem ersten und dem zweiten faseroptischen Mittel und der Strahlungsquelle bzw. der Auswerteschaltung können praktisch keine Störungen in den Messvorgang eingebracht werden.

Eine ganz besonders bevorzugte Ausgestaltung der Erfindung ist dadurch gekennzeichnet, dass das erste faseroptische Mittel und das zweite faseroptische Mittel so nah aneinander geführt sind, dass ein Übersprechen der in dem jeweils einen faseroptischen Mittel geführten Teilstrahlung auf das jeweils andere faseroptische Mittel möglich ist. Durch diese Maßnahme ist es auf besonders einfache Weise möglich, sowohl das erste faseroptische Mittel als auch das zweite faseroptische Mittel mit Strahlung aus der Strahlungsquelle zu beaufschlagen, da es ausreichend ist, lediglich ein einziges der beiden faseroptischen Mittel mit der Strahlung zu beaufschlagen. Ferner bietet diese Anordnung den weiteren Vorteil, dass auch eine Wechselwirkung in Form von Interferenz zwischen der in dem ersten faseroptischen Mittel und der in dem zweiten faseroptischen Mittel geführten Teilstrahlungen möglich ist, ohne dass es einer klassischen Zusammenführung der Teilstrahlungen bedürfte.

Damit technisch hinreichend gut auswertbare Signale entstehen, ist der Abstand zwischen dem ersten faseroptischen Mittel und dem zweiten faseroptischen Mittel kleiner als 10 Wellenlängen der geführten Teilstrahlung gewählt, vorzugsweise wird der Abstand kleiner als 5 Wellenlängen der geführten Teilstrahlung gewählt, da dann erfahrungsgemäß ein ausreichend starkes Übersprechen der Teilstrahlungen realisiert ist. Insbesondere erfolgt das Übersprechen der Teilstrahlung zwischen dem ersten faseroptischen Mittel und dem zweiten faseroptischen Mittel durch außerhalb des ersten faseroptischen Mittels und/oder außerhalb des zweiten faseroptischen Mittels geführte evaneszente Anteile der Teilstrahlung. Diese Anteile der Strahlung bewegen sich verlustfrei außerhalb des faseroptischen Kerns innerhalb der niedrig brechenden Zone um den Faserkern und können bei der vorbeschriebenen hinreichenden Annäherung der beiden faseroptischen Mittel - hier der faseroptischen Kerne - in den jeweils benachbarten Kern übersprechen und dort weitergeleitet werden.

Als besonders unproblematisch hat es sich für die Ein- und Auskopplung von Strahlung in das bzw. aus dem zweiten faseroptischen Mittel herausgestellt, wenn die optische Speisefaser einen so großen lichtleitenden Querschnitt aufweist, dass die Speisefaser an der eingangsseitigen Stoßstelle den lichtleitenden Querschnitt des ersten faseroptischen Mittels und den lichtleitenden Querschnitt des zweiten faseroptischen Mittels zumindest teilweise abdeckt, so dass praktisch beide faseroptischen Mittel mit Strahlung aus der Strahlungsquelle beaufschlagt werden können. Entsprechend vorteilhaft ist es, wenn die optische Auswertefaser einen so großen lichtleitenden Querschnitt aufweist, dass die Auswertefaser an der ausgangsseitigen Stoßstelle den lichtleitenden Querschnitt des ersten faseroptischen Mittels und den lichtleitenden Querschnitt der zweiten faseroptischen Mittels zumindest teilweise abdeckt. Besonders geeignet für die Speisefaser und die Auswertefaser sind bei dem vorbeschriebenen Anwendungsbeispiel Multimode-Fasern, die üblicherweise über einen lichtleitenden Kern größeren Querschnitts verfügen, als dies bei Singlemode-Fasern der Fall ist.

Bei einer alternativen bevorzugten Variante des erfindungsgemäßen Auslenkungsmessgeräts ist vorgesehen, dass der lichtleitende Querschnitt der optischen Speisefaser an der eingangsseitigen Stoßstelle nur den lichtleitenden Querschnitt des ersten faseroptischen Mittels oder den lichtleitenden Querschnitt der zweiten faseroptischen Mittels zumindest teilweise abdeckt, so dass bei diesem Ausführungsbeispiel ein direktes Einspeisen nur in das erste faseroptische Mittel oder alternativ in das zweite faseroptische Mittel möglich ist, was voraussetzt, dass das erste faseroptische Mittel und das zweite faseroptische Mittel hinreichend nah nebeneinander verlaufen, wie dies oben bereits ausgeführt worden ist. Entsprechend kann zusätzlich oder alternativ vorgesehen sein, dass der lichtleitende Querschnitt der optischen Auswertefaser an der ausgangsseitigen Stoßstelle nur den lichtleitenden Querschnitt des ersten faseroptischen Mittels oder den lichtleitenden Querschnitt des zweiten faseroptischen Mittels zumindest teilweise abdeckt, wodurch lediglich die direkte Auskopplung aus einem der die optischen Wege bildenden faseroptischen Mittel gewährleistet ist. Dies setzt ebenfalls voraus, dass es der ersten Teilstrahlung in dem ersten faseroptischen Mittel und der zweiten Teilstrahlung in dem zweiten faseroptischen Mittel aufgrund einer hinreichenden Annäherung der beiden faseroptischen Mittel möglich gewesen ist, interferometrisch wechselzuwirken. Bei diesen Ausführungsbeispielen ist es möglich, zur Einkopplung der Strahlung und zur Äuskopplung der Strahlung einfach eine Singlecore-Faser nach herkömmlicher Bauart und mit herkömmlichen Kerndurchmessern zu verwenden. Die vorbeschriebenen Maßnahmen der gemeinsamen Einkopplung bzw. Auskopplung von Strahlung in das erste und das zweite faseroptische Mittel bzw. der Einkopplung von Strahlung in nur eine der beiden faseroptischen Mittel und der Auskopplung von Teilstrahlung aus nur einem der faseroptischen Mittel sind in verschiedener Weise kombinierbar.

Im Einzelnen gibt es nun eine Vielzahl von Möglichkeiten, das erfindungsgemäße Auslenkungsmessgerät auszugestalten und weiterzubilden. Dazu wird einerseits verwiesen auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: schematisch eine aus dem Stand der Technik bekannte Realisierung eines auf dem Interferometrieprinzip beruhenden Auslenkungmessgeräts am Beispiel eines Druckmessgeräts,
- Fig. 2: eine schematische Darstellung eines erfindungsgemäßen Auslenkungsmessgeräts,
- Fig. 3: eine Detailansicht der Faseranordnung auf einer Membran gemäß dem Ausführungsbeispiel nach Fig. 2,
- Fig. 4: eine schematische Darstellung einer Spleißstelle zwischen einem ersten und einem zweiten faseroptischen Mittel und einer Auswertefaser,
- Fig. 5: eine weitere schematische Darstellung der Übergänge zwischen der Speisefaser, dem ersten und dem zweiten faseroptischen Mittel und der Auswertefaser eines erfindungsgemäßen Auslenkungsmessgeräts,
- Fig. 6: eine weitere schematische Darstellung der Übergänge zwischen der Speisefaser, dem ersten und dem zweiten faseroptischen Mittel und der Auswertefaser eines erfindungsgemäßen Auslenkungsmessgeräts und
- Fig. 7: eine weitere schematische Darstellung der Übergänge zwischen der Speisefaser, dem ersten und dem zweiten faseroptischen Mittel und der Auswertefaser eines erfindungsgemäßen Auslenkungsmessgeräts.

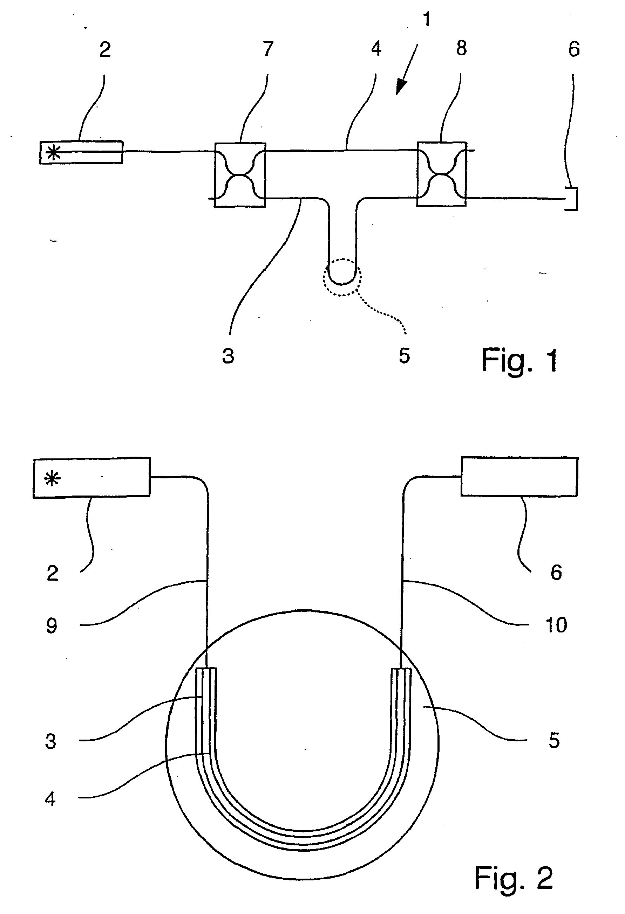

In der Fig. 1 ist dargestellt ein aus dem Stand der Technik bekanntes Auslenkungsmessgerät, das nach dem Interferometrieprinzip arbeitet und vorliegend zur Differenzdruckmessung in einem Vortex-Durchflussmessgerät Verwendung findet. Das Auslenkungsmessgerät 1 weist eine Strahlungsquelle 2 auf und ferner ein einen ersten Lichtweg realisierendes erstes faseroptisches Mittel 3 und ein einen zweiten Lichtweg realisierendes zweites faseroptisches Mittel 4. Der Auslenkungskörper 5 ist im vorliegenden Fall eine flächige Membran, die von dem Medium umgeben wird, das durch das im Einzelnen näher nicht dargestellte Durchflussmessgerät fließt.

Das erste faseroptische Mittel 3 und das zweite faseroptische Mittel 4 werden eingangsseitig mit interferenzfähiger Strahlung der Strahlungsquelle 2 beaufschlagt, wobei im vorliegenden Fall das erste faseroptische Mittel 3 mit dem als Membran ausgestalteten Auslenkungskörper 5 verbunden ist. Üblicherweise werden optische Koppler 7, 8 dazu verwendet, die zunächst nur in dem zweiten faseroptischen Mittel 4 vorhandene Strahlung teilweise auch auf das erste faseroptische Mittel 3 zu übertragen, so dass sichergestellt ist, dass die später in den zweiten optischen Koppler 8 wieder zusammengeführte erste Teilstrahlung und zweite Teilstrahlung aus dem ersten faseroptischen Mittel 3 und dem zweiten faseroptischen Mittel 4 interferieren können.

Je nach Grad der Auslenkung des als Membran ausgestalteten Auslenkungskörpers 5 und der dadurch bewirkten Längenveränderung des ersten Lichtweges in dem ersten faseroptischen Mittel 3 stellt sich an der Auswerteschaltung 6 als Ergebnis die Interferenzstrahlung ein, die Rückschlüsse auf die Auslenkung des Auslenkungskörpers 5 zulässt. Bei Hochtemperaturanwendungen ist der als Membran ausgestaltete Auslenkungskörper 5 ohne Weiteres Temperaturen von mehreren 100° C ausgesetzt, so dass in der tatsächlichen technischen Realisierung die optischen Koppler 7 und 8, die Strahlungsquelle 2 und die Auswerteschaltung 6 von der eigentlichen Messstelle - nämlich dem Auslenkungskörper 5 - absichtlich beabstandet sind. Dies hat jedoch den nachteiligen Effekt, dass die mechanisch sensitive Strecke zwischen den beiden optischen Kopplern 7 und 8 nicht nur im Bereich des Auslenkungskörpers 5 ausgebildet ist, sondern auch auf einer erheblichen weiteren Wegstrecke, über die die Gefahr der Einstreuung von Störungen besteht, die beispielsweise durch Vibrationen in dem Auslenkungsmessgerät verursacht werden können.

In Fig. 2 ist ganz schematisch angedeutet der Aufbau eines erfindungsgemäßen Auslenkungsmessgeräts, bei dem mechanische Störungen der eigentlich interessierenden Messung der Auslenkung des Auslenkungskörpers 5 nicht so einfach auftreten können. Hier sind das erste faseroptische Mittel 3 und das zweite faseroptische Mittel 4 ausschließlich am Auslenkungskörper 5 angeordnet, nämlich so mit dem Auslenkungskörper 5 verbunden, dass die Auslenkung des Auslenkungskörpers 5 automatisch auch zu einer Veränderung der durch das erste faseroptische Mittel 3 und durch das zweite faseroptische Mittel 4 definierten Lichtwege kommt und damit zu einer auswertbaren Interferenzerscheinung, die durch die Auswerteschaltung 6 detektiert wird.

Im vorliegenden Fall ist das erste faseroptische Mittel 3 eingangsseitig mit einer einzigen optischen Speisefaser 9 mit der Strahlungsquelle 2 verbunden, und ist das erste faseroptische Mittel 3 ausgangsseitig ebenfalls mit einer einzigen optischen Auswertefaser 10 mit der Auswerteschaltung 6 verbunden. Die durch die optische Speisefaser 9 und die optische Auswertefaser 10 definierten Lichtwege sind praktisch störungsfrei, da sich Interferenzen hier nicht ergeben können. Die dargestellte Anordnung ist deshalb vorteilhaft, weil auf die diskrete Verwendung von faseroptischen Kopplern - wie sie in dem Ausführungsbeispiel gemäß Fig. 1 verwendet worden sind - hier vollständig verzichtet wird. Eine optische Verbindung zwischen der Speisefaser 9 und dem ersten faseroptischen Mittel 3 und der Auswertefaser 10 und dem ersten faseroptischen Mittels 3 ist hier durch übliche Spleißtechniken realisiert.

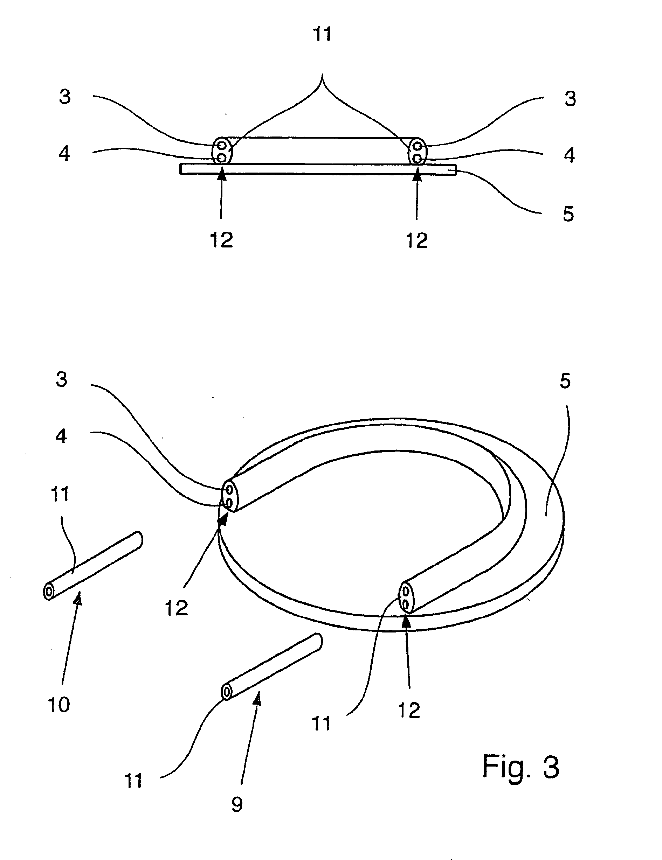

Wie anhand Fig. 3 ersichtlich ist, sind das erste faseroptische Mittel 3 und das zweite faseroptische Mittel 4 gemeinsam durch eine optische Dualcore-Faser realisiert, also durch eine Faser, in der zwei optische Kerne in einer niedrigbrechenden Umhüllung 11 eingebettet sind. Ebenfalls ist in Fig. 3 zu erkennen, dass die optische Speisefaser 9 und die optische Auswertefaser 10 jeweils durch eine optische Singlecore-Faser gebildet sind die ebenfalls jeweils über einen optisch leitfähigen Kern und eine niedrigbrechende Umhüllung 11 verfügen.

In sämtlichen dargestellten Ausführungsbeispielen sind das erste faseroptische Mittel 3 und das zweite faseroptische Mittel 4 so nah aneinander geführt, dass ein Übersprechen der in dem jeweils einen faseroptischen Mittel 3, 4 geführten Teilstrahlung auf das jeweils andere faseroptische Mittel 4, 3 möglich ist, wobei vorliegend der Abstand zwischen dem ersten faseroptischen Mittel 3 und dem zweiten faseroptischen Mittels 4 kleiner als fünf Wellenlängen der geführten Teilstrahlung ist. Dadurch ist in den dargestellten Ausführungsbeispielen gewährleistet, dass das Übersprechen der Teilstrahlung zwischen dem ersten faseroptischen Mittel 3 und dem zweiten faseroptischen Mittel 4 durch die außerhalb des ersten faseroptischen Mittels 3 und außerhalb der zweiten faseroptischen Mittels 4 geführten evaneszenten Anteile der Teilstrahlung erfolgt.

In Fig. 3 ist erkennbar, dass die Dualcore-Faser, die das erste faseroptische Mittel 3 und das zweite faseroptische Mittel 4 bildet, eine Abflachung 12 aufweist und mit der Abflachung 12 an dem Auslenkungskörper 5 flach aufliegt, wobei darauf geachtet worden ist, dass die Abflachung 12 bezüglich der Kerne der Dualcore-Faser gleichbleibend orientiert ist, im vorliegenden Fall die Kerne nämlich senkrecht über der Abflachung 12 und hintereinander liegend angeordnet sind. Durch diese Anordnung ist gewährleistet, dass das erste faseroptische Mittel 3 und das zweite faseroptische Mittel 4 nicht exakt die gleiche Auslenkung erfahren, die Lichtwege also bei Auslenkung des Auslenkungskörpers 5 unterschiedlich verkürzt bzw. verlängert werden, so dass ein resultierender Interferenzeffekt wahrgenommen werden kann.

In den Figuren 4 bis 7 sind ganz schematisch verschiedene Ausgestaltungen der Übergänge zwischen der optischen Speisefaser 9 und dem ersten faseroptischen Mittel 3 und dem zweiten faseroptischen Mittel 4 bzw. die Ausgestaltung zwischen dem ersten faseroptischen Mittel 3 und dem zweiten faseroptischen Mittel 4 und der Auswertefaser 10 dargestellt.

In Fig. 4 ist angedeutet, dass die optische Speisefaser 9 einen so großen lichtleitenden Querschnitt aufweist, dass die Speisefaser 9 an der eingangsseitigen Stoßstelle den lichtleitenden Querschnitt des ersten faseroptischen Mittels 3 und den lichtleitenden Querschnitt des zweiten faseroptischen Mittels 4 zumindest teilweise abdeckt, wobei das gleiche auch für die optische Auswertefaser 10 gilt, die einen so großen lichtleitenden Querschnitt aufweist, dass sie an der ausgangsseitigen Stoßstelle den lichtleitenden Querschnitt des ersten faseroptischen Mittels 3 und den lichtleitenden Querschnitt der zweiten faseroptischen Mittels 4 zumindest teilweise gemeinsam abdeckt.

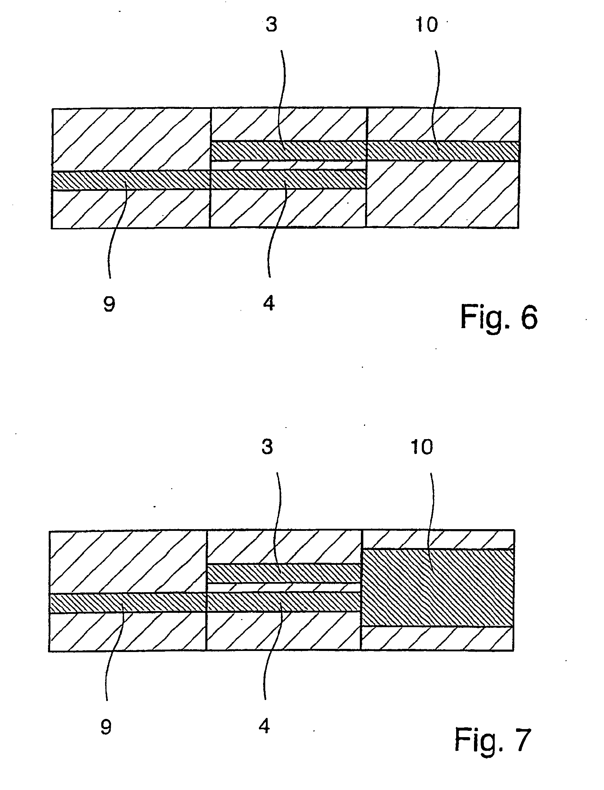

Die Ausführungsbeispiele gemäß den Figuren 5, 6 und 7 haben gemeinsam, dass der lichtleitende Querschnitt der optischen Speisefaser 9 an der eingangsseitigen Stoßstelle nur den lichtleitenden Querschnitt des ersten faseroptischen Mittels 3 oder den lichtleitenden Querschnitt des zweiten faseroptischen Mittels 4 zumindest teilweise abdeckt. Die Ausführungsbeispiele gemäß den Figuren 5 und 6 haben zudem gemeinsam, dass der lichtleitende Querschnitt der optischen Auswertefaser 10 an der ausgangsseitigen Stoßstelle nur den lichtleitenden Querschnitt des ersten faseroptischen Mittels 3 zumindest teilweise abdeckt.

Das bei dem Ausführungsbeispiel gemäß Fig. 5 realisierte Anschlussschema sieht vor, dass die optische Speisefaser 9 nur in ein faseroptisches Mittel des ersten faseroptischen Mittels 3 und des zweiten faseroptischen Mittels 4 Strahlung einkoppelt - vorliegend nämlich nur in das erste faseroptische Mittel 3 - und die Auswertefaser 10 nur die Teilstrahlung aus demselben faseroptischen Mittel 3 auskoppelt, in das die Speisefaser 9 Strahlung eingekoppelt hat. Durch den Effekt der Übersprechung in das zweite faseroptische Mittel 4 führt dieses zweite faseroptische Mittel 4 auch Teilstrahlung, wobei diese Teilstrahlung interferierend in das erste faseroptische Mittel 3 letztlich zurückkoppelt, so dass die über die Auswertefaser 10 übermittelte Interferenzstrahlung durch die nicht explizit dargestellte Auswerteschaltung auswertbar ist.

Bei dem Ausführungsbeispiel gemäß Fig. 6 wird ein anderer Weg beschritten. Hier koppelt die optische Speisefaser 9 auch - wie in dem Ausführungsbeispiel gemäß Fig. 5 - nur in ein faseroptisches Mittel des ersten faseroptischen Mittels 3 und des zweiten faseroptischen Mittels 4 Strahlung ein - vorliegend nämlich in das zweite faseroptische Mittel 4 -, jedoch koppelt die Auswertefaser 10 nur die Teilstrahlung aus demjenigen faseroptischen Mittels des ersten faseroptischen Mittels 3 und des zweiten faseroptischen Mittels 4 aus, in das die Speisefaser 9 nicht direkt Strahlung einkoppelt, die Auswertefaser 10 ist hier also mit dem ersten faseroptischen Mittel 3 verbunden. Auch bei diesem Ausführungsbeispiel ist die Möglichkeit des Übersprechens zwischen dem ersten faseroptischen Mittel 3 und dem zweiten faseroptischen Mittel 4 notwendige Voraussetzung für die Funktionsfähigkeit des Auslenkungsmessgeräts.

Bei dem Ausführungsbeispiel gemäß Fig. 7 koppelt die optische Speisefaser 9 ebenfalls nur in ein einziges faseroptische Mittel des ersten faseroptischen Mittels 3 und des zweiten faseroptischen Mittels 4 Strahlung ein - vorliegend nämlich in das zweite faseroptische Mittel 4 - die Auswertefaser 10 koppelt ausgangsseitig jedoch gemeinsam die Teilstrahlungen des ersten faseroptischen Mittels 3 und des zweiten faseroptischen Mittels 4 ausgangsseitig aus, wobei es sich bei der Auswertefaser 10 im dargestellten Fall um eine Multimode-Faser handelt.

## Patentansprüche

1. Auslenkungsmessgerät (1) nach dem Interferometrieprinzip mit einer Strahlungsquelle (2), mit einem einen ersten Lichtweg realisierenden ersten faseroptischen Mittel (3), mit einem einen zweiten Lichtweg realisierenden zweiten faseroptischen Mittel (4), mit einem Auslenkungskörper (5) und mit einer Auswerteschaltung (6), wobei das erste faseroptische Mittel (3) und das zweite faseroptische Mittel (4) eingangsseitig mit interferenzfähiger Strahlung der Strahlungsquelle (2) beaufschlagbar sind, wobei wenigstens das erste faseroptische Mittel (3) mit dem Auslenkungskörper (5) verbunden ist und wobei die in dem ersten faseroptischen Mittel (3) geführte erste Teilstrahlung und die in dem zweiten faseroptischen Mittel (4) geführte zweite Teilstrahlung ausgangsseitig zusammengeführt werden und die Interferenzstrahlung der Auswerteschaltung (6) zugeführt und durch die Auswerteschaltung (6) ausgewertet wird, und wobei das erste faseroptische Mittel (3) und/oder das zweite faseroptische Mittel (4) eingangsseitig mit einer einzigen optischen Speisefaser (9) mit der Strahlungsquelle (2) verbunden sind/ist und das erste faseroptische Mittel (3) und/oder das zweite faseroptische Mittel (4) ausgangsseitig mit einer einzigen optischen Auswertefaser (10) mit der Auswerteschaltung (6) verbunden sind,
**dadurch gekennzeichnet,**
**dass** das erste faseroptische Mittel (3) und das zweite faseroptische Mittel (4) ausschließlich am Auslenkungskörper (5) angeordnet sind.

2. Auslenkungsmessgerät nach Anspruch 1, **dadurch gekennzeichnet, dass** das erste faseroptische Mittel (3) und das zweite faseroptische Mittel (4) gemeinsam durch eine optische Multicore-Faser gebildet sind, insbesondere durch eine optische Dualcore-Faser.

3. Auslenkungsmessgerät nach Anspruch 1 oder 2, **dadurch gekennzeichnet, dass** die optische Speisefaser (9) und/oder die optische Auswertefaser (10) durch eine optische Singlecore-Faser gebildet sind/ist.

4. Auslenkungsmessgerät nach einem der Ansprüche 1 bis 3, **dadurch gekennzeichnet, dass** das erste faseroptische Mittel (3) und das zweite faseroptische Mittel (4) so nah aneinander geführt sind, dass ein Übersprechen der in dem jeweils einen faseroptischen Mittel (3,4) geführten Teilstrahlung auf das jeweils andere faseroptische Mittel (4, 3) möglich ist, insbesondere der Abstand zwischen dem ersten faseroptischen Mittel (3) und dem zweiten faseroptischen Mittel (4) kleiner als 10 Wellenlängen der geführten Teilstrahlung ist, vorzugsweise kleiner als 5 Wellenlängen der geführten Teilstrahlung ist.

5. Auslenkungsmessgerät nach Anspruch 4, **dadurch gekennzeichnet, dass** das Übersprechen der Teilstrahlung zwischen dem ersten faseroptischen Mittel (3) und dem zweiten faseroptischen Mittel (4) durch außerhalb des ersten faseroptischen Mittels (3) und/oder außerhalb des zweiten faseroptischen Mittels (4) geführte evaneszente Anteile der Teilstrahlung erfolgt.

6. Auslenkungsmessgerät nach einem der Ansprüche 2 und 3 bis 5 soweit auf Anspruch 2 rückbezogen, **dadurch gekennzeichnet, dass** die Multicore- bzw. die Dualcore-Faser eine Abflachung (12) aufweist und mit der Abflachung (12) an dem Auslenkungskörper (5) aufliegt, insbesondere wobei die Abflachung (12) bezüglich der Kerne der Multicore- bzw. der Dualcore-Faser gleichbleibend orientiert ist, die Kerne insbesondere senkrecht über der Abflachung (12) und hintereinander stehend angeordnet sind.

7. Auslenkungsmessgerät nach einem der Ansprüche 1 bis 6, **dadurch gekennzeichnet, dass** die optische Speisefaser (9) einen so großen lichtleitenden Querschnitt aufweist, dass die Speisefaser (9) an der eingangsseitigen Stoßstelle den lichtleitenden Querschnitt des ersten faseroptischen Mittels (3) und den lichtleitenden Querschnitt des zweiten faseroptischen Mittels (4) zumindest teilweise abdeckt und/oder dass die optische Auswertefaser (10) einen so großen lichtleitenden Querschnitt aufweist, dass die Auswertefaser (10) an der ausgangsseitigen Stoßstelle den lichtleitenden Querschnitt des ersten faseroptischen Mittels (3) und den lichtleitenden Querschnitt des zweiten faseroptischen Mittels (4) zumindest teilweise abdeckt.

8. Auslenkungsmessgerät nach einem der Ansprüche 1 bis 7, **dadurch gekennzeichnet, dass** der lichtleitende Querschnitt der optischen Speisefaser (9) an der eingangsseitigen Stoßstelle nur den lichtleitenden Querschnitt des ersten faseroptischen Mittels (3) oder den lichtleitenden Querschnitt des zweiten faseroptischen Mittels (4) zumindest teilweise abdeckt und/oder dass der lichtleitende Querschnitt der optischen Auswertefaser (10) an der ausgangsseitigen Stoßstelle nur den lichtleitenden Querschnitt des ersten faseroptischen Mittels (3) oder den lichtleitenden Querschnitt des zweiten faseroptischen Mittels (4) zumindest teilweise abdeckt.

9. Auslenkungsmessgerät nach Anspruch 8, **dadurch gekennzeichnet, dass** die optische Speisefaser (9) nur in ein faseroptisches Mittel des ersten faseroptischen Mittels (3) und des zweiten faseroptischen Mittels (4) Strahlung einkoppelt und dass die Auswertefaser (10) nur die Teilstrahlung aus demselben faseroptischen Mittel (3, 4) auskoppelt, in das die Speisefaser (9) Strahlung einkoppelt.

10. Auslenkungsmessgerät nach Anspruch 8, **dadurch gekennzeichnet, dass** die optische Speisefaser (9) nur in ein faseroptisches Mittel des ersten faseroptischen Mittels (3) und des zweiten faseroptischen Mittels (4) Strahlung einkoppelt und dass die Auswertefaser (10) nur die Teilstrahlung aus demjenigen faseroptischen Mittel des ersten faseroptischen Mittels (3) und des zweiten faseroptischen Mittels (4) auskoppelt, in das die Speisefaser nicht direkt Strahlung einkoppeit.

11. Auslenkungsmessgerät nach den Ansprüchen 7 und 8, **dadurch gekennzeichnet, dass** die optische Speisefaser (9) nur in ein faseroptisches Mittel des ersten faseroptischen Mittels (3) und des zweiten faseroptischen Mittels (4) Strahlung einkoppelt und dass die Auswertefaser (10) die Teilstrahlungen des ersten faseroptischen Mittels (3) und des zweiten faseroptischen Mittels (4) ausgangsseitig auskoppelt.

## Claims

1. Deflection measuring device (1) according to the interferometer principle having a radiation source (2), having a first fiber-optic means (3) implementing a first light path, having a second fiber-optic means (4) implementing a second light path, having a deflection body (5) and having an evaluation circuit (6), wherein the first fiber-optic means (3) and the second fiber-optic means (4) can be impinged with interference-capable radiation from the radiation source (2) on the input side, wherein at least the first fiber-optic means (3) is connected with the deflection body (5) and wherein the first partial radiation guided in the first fiber-optic means (3) and the second radiation beam guided in the second fiber-optic means (4) are brought together on the output side and the interference radiation is conveyed to the evaluation circuit (6) and evaluated by the evaluation circuit (6) and wherein the first fiber-optic means (3) and/or the second fiber-optic means (4) is/are connected on the input side to the radiation source (2) with one single optical feed fiber (9) and the first fiber-optic means (3) and/or the second fiber-optic means (4) is/are connected on the output side to the evaluation circuit (6) with one single optical evaluation fiber (10),
**characterized in**
**that** the first fiber-optic means (3) and the second fiber-optic means (4) are arranged only on the deflection body (5).

2. Deflection measuring device according to claim 1, **characterized in that** the first fiber-optic means (3) and the second fiber-optic means (4) are formed together by an optical multi-core fiber, in particular by an optical dual-core fiber.

3. Deflection measuring device according to claim 1 or 2, **characterized in that** the optical feed fiber (9) and/or the optical evaluation fiber (10) are formed by an optical single-core fiber.

4. Deflection measuring device according any one of claims 1 to 3, **characterized in that** the first fiber-optic means (3) and the second fiber-optic means (4) are guided so close to one another that crosstalk of the partial radiation guided along each one of the fiber-optic means (3, 4) is possible to the other fiber-optic means (4, 3), in particular the distance between the first fiber-optic means (3) and the second fiber-optic means (4) is less than 10 wavelengths of the guided partial radiation, preferably less than 5 wavelengths of the guided partial radiation.

5. Deflection measuring device according to claim 4, **characterized in that** the crosstalk of the partial beam between the first fiber-optic means (3) and the second fiber-optic means (4) occurs by means of guided evanescent parts of the partial radiation guided outside of the first fiber-optic means (3) and/or outside of the second fiber-optic means (4).

6. Deflection measuring device according to any one of claims 2 and 3 to 5 insofar as referring to claim 2, **characterized in that** the multi-core or the dual-core fiber has a flattening (12) and lies against the deflection body (5) with the flattening (12), in particular wherein the flattening (12) is oriented unchangingly in respect to the cores of the multi-core or dual-core fiber, the cores being arranged in particular perpendicular above the flattening (12) and one after the other.

7. Deflection measuring device according to any one of claims 1 to 6, **characterized in that** the optical feed fiber (9) has such a large light-guiding cross section that the feed fiber (9) at the input-side junction at least partially covers the light- guiding cross section of the first fiber-optic means (3) and the light-guiding cross section of the second fiber-optic means (4) and/or that the optical evaluation fiber (10) has such a large light- guiding cross section that the evaluation fiber (10) at the output-side junction at least partially covers the light-guiding cross section of the first fiber-optic means (3) and the light-guiding cross section of the second fiber-optic means (4).

8. Deflection measuring device according to any one of claims 1 to 7, **characterized in that** the light-guiding cross section of the optical feed fiber (9) at the input-side junction at least partially covers only the light- guiding cross section of the first fiber-optic means (3) or the light- guiding cross section of the second fiber-optic means (4) and/or that the light- guiding cross section of the optical evaluation fiber (10) at the output-side junction only partially covers the light- guiding cross section of the first fiber-optic means (3) or the light- guiding cross section of the second fiber-optic means (4).

9. Deflection measuring device according to claim 8, **characterized in that** the optical feeding fiber (9) couples radiation only into a fiber-optic means of the first fiber-optic means (3) and the second fiber-optic means (4) and that the evaluation fiber (10) only decouples the partial radiation out of the same fiber-optic means (3, 4) in which the feed fiber (9) couples radiation into.

10. Deflection measuring device according to claim 8, **characterized in that** the optical feed fiber (9) couples radiation only into a fiber-optic means of the first fiber-optic means (3) and the second fiber-optic means (4) and that the evaluation fiber (10) only decouples the partial radiation out of the that fiber-optic means of the first fiber-optic means (3) and the second fiber-optic means (4) in which the feed fiber (9) not directly couples radiation into.

11. Deflection measuring device according to claims 7 and 8, **characterized in that** the optical feed fiber (9) only couples radiation into a fiber-optic means of the first fiber-optic means (3) and the second fiber-optic means (4) and that the evaluation fiber (10) at the output side decouples the partial radiations out of the first fiber-optic means (3) and the second fiber-optic means (4).

## Revendications

1. Appareil de mesure de déviation (1) utilisant le principe de l'interférométrie, comprenant une source de rayonnement (2), comprenant un premier moyen à fibre optique (3) réalisant un premier chemin optique, comprenant un second moyen à fibre optique (4) réalisant un second chemin optique, comprenant un corps de déviation (5) et comprenant un circuit d'évaluation (6), dans lequel un rayonnement se prêtant à une interférence provenant de la source de lumière (2) peut être incident du côté de l'entrée sur le premier moyen à fibre optique (3) et le deuxième moyen à fibre optiques (4), dans lequel le premier moyen à fibre optique (3) est au moins relié au corps de déviation (5) et dans lequel le premier rayonnement partiel guidé dans le premier moyen à fibre optique (3) et le second rayonnement partiel guidé dans le second moyen à fibre optique (4) sont guidés ensemble du côté de la sortie et le rayonnement d'interférence est délivré au circuit d'évaluation (6) et est évalué par le circuit d'évaluation (6), et dans lequel le premier moyen à fibre optique (3) et/ou le second moyen à fibre optique (4) sont/est relié(s) du côté de l'entrée par une fibre d'alimentation optique unique (9) à la source de rayonnement (2) et le premier moyen à fibre optique (3) et/ou le second moyen à fibre optique (4) sont reliés en sortie par une fibre optique d'évaluation unique (10) au circuit d'évaluation (6),
**caractérisé en ce que**
le premier moyen à fibre optique (3) et le second moyen à fibre optique (4) sont disposés exclusivement sur le corps de déviation (5).

2. Appareil de mesure de déviation selon la revendication 1, **caractérisé en ce que** le premier moyen à fibre optique (3) et le second moyen à fibre optique (4) sont formés ensemble par une fibre optique multi-coeurs, notamment par une fibre optique à deux coeurs.

3. Appareil de mesure de déviation selon la revendication 1 ou 2, **caractérisé en ce que** la fibre optique d'alimentation (9) et/ou la fibre optique d'évaluation (10) sont/est formée(s) par une fibre optique mono-coeur.

4. Appareil de mesure de déviation selon l'une quelconque des revendications 1 à 3, **caractérisé en ce que** le premier moyen à fibre optique (3) et le second moyen à fibre optique (4) sont guidés à proximité telle l'un de l'autre qu'une diaphonie du rayonnement partiel guidé dans ledit moyen à fibre optique (3, 4) respectif est possible sur l'autre moyen à fibre optique (4, 3) respectif, et plus particulièrement **en ce que** la distance entre le premier moyen à fibre optique (3) et le second moyen à fibre optique (4) est inférieure à 10 longueurs d'onde du rayonnement partiel guidé, et de préférence, est inférieure à 5 longueurs d'onde du rayonnement partiel guidé.

5. Appareil de mesure de déviation selon la revendication 4, **caractérisé en ce que** la diaphonie du rayonnement partiel entre le premier moyen à fibre optique (3) et le second moyen à fibre optique (4) s'effectue par l'intermédiaire de parties évanescentes du rayonnement partiel guidées à l'extérieur du premier moyen à fibre optique (3) et/ou à l'extérieur du second moyen à fibre optique (4).

6. Appareil de mesure de déviation selon l'une quelconque des revendications 2 et 3 à 5, lorsqu'il est fait référence à la revendication 2, **caractérisé en ce que** la fibre multi-coeurs ou à deux coeurs présente une partie plane (12) et repose sur le corps de déviation (5) par l'intermédiaire de la partie plane (12), et plus particulièrement, dans lequel la partie plane (12) est orientée de manière fixe par rapport aux coeurs de la fibre multi-coeur ou à deux coeurs et les coeurs sont plus particulièrement disposés perpendiculairement sur la partie plane (12) et de manière à être placés l'un derrière l'autre.

7. Appareil de mesure de déviation selon l'une quelconque des revendications 1 à 6, **caractérisé en ce que** la fibre optique d'alimentation (9) présente une section transversale guidant la lumière suffisamment grand pour que la fibre d'alimentation (9) couvre au moins partiellement la section transversale du premier moyen à fibre optique (3) guidant la lumière et la section transversale guidant la lumière du second moyen à fibre optique (4) au point de jonction se trouvant du côté de l'entrée et/ou **en ce que** la fibre optique d'évaluation (10) présente une section transversale guidant la lumière suffisamment grande pour que la fibre d'évaluation (10) couvre au moins partiellement la section transversale guidant la lumière du premier moyen à fibre optique (3) et la section transversale guidant la lumière du second moyen à fibre optique (4) au point de jonction situé du côté de l'entrée.

8. Appareil de mesure de déviation selon l'une quelconque des revendications 1 à 7, **caractérisé en ce que** la section transversale guidant la lumière de la fibre optique d'alimentation (9) ne couvre au moins partiellement que la section transversale guidant la lumière du premier moyen à fibre optique (3) ou la section transversale guidant la lumière du second moyen à fibre optique (4) au point de jonction situé du côté de l'entrée et/ou **en ce que** la section transversale guidant la lumière de la fibre optique d'évaluation (10) ne couvre au moins partiellement que la section transversale guidant la lumière du premier moyen à fibre optique (3) ou la section transversale guidant la lumière du second moyen à fibre optique (4) au point de jonction situé du côté de la sortie.

9. Appareil de mesure de déviation selon la revendication 8, **caractérisé en ce que** la fibre optique d'alimentation (9) ne couple en entrée un rayonnement que dans un moyen à fibre optique du premier moyen à fibre optique (3) et du second moyen à fibre optique (4) et **en ce que** la fibre d'évaluation (10) ne couple en sortie que le rayonnement partiel provenant des mêmes moyens à fibres optiques (3, 4) que ceux dans lesquels la fibre d'alimentation (9) couple en entrée le rayonnement.

10. Appareil de mesure de déviation selon la revendication 8, **caractérisé en ce que** la fibre optique d'alimentation (9) ne couple en entrée un rayonnement que dans un moyen à fibre optique du premier moyen à fibre optique (3) et du second moyen à fibre optique (4) et **en ce que** la fibre d'évaluation (10) ne couple en sortie que le rayonnement partiel provenant des mêmes moyens à fibres optiques du premier moyen à fibre optique (3) et du second moyen à fibre optique (4) que ceux dans lesquels la fibre optique ne couple pas directement en entrée le rayonnement.

11. Appareil de mesure de déviation selon les revendications 7 et 8, **caractérisé en ce que** la fibre optique d'alimentation (9) ne couple en entrée le rayonnement que dans un moyen à fibre optique du premier moyen à fibre optique (3) et du second moyen à fibre optique (4) et **en ce que** la fibre d'évaluation (10) couple en sortie les rayonnements partiels du premier moyen à fibre optique (3) et du second moyen à fibre optique (4) du côté de la sortie.
